# EUROPEAN PATENT APPLICATION

(11) **EP 4 207 129 A1**
(43) Date of publication of application: **05.07.2023**
(21) Application number: 21860907.1
(22) Date of filing: 03.06.2021
(51) Int. Cl.: G08G 1/00

(54) **INFORMATION PROCESSING METHOD AND INFORMATION PROCESSING SYSTEM**

(30) Priority: 26.08.2020 US 202063070573 P; 23.04.2021 JP 2021073610
(71) Applicant: Panasonic Intellectual Property Corporation of America, Torrance, CA 90504 (US)
(72) Inventor: KAWAMOTO, Hirokazu, Osaka-shi, Osaka 540-6207 (JP); MURAMOTO, Eiichi, Osaka-shi, Osaka 540-6207 (JP); TOJIMA, Masayoshi, Osaka-shi, Osaka 540-6207 (JP)
(74) Representative: Novagraaf International SA
(86) International application number: PCT/JP2021/021255
(87) International publication number: WO 2022/044476

(57) **Abstract**

An information processing method includes: obtaining first simulation results by running a simulation according to an operating parameter of a mobile object before and after a first change (S12); evaluating each first simulation result based on risk, cost, and value indexes in an operation of the mobile object to obtain first evaluation results (S13); calculating a first influence degree of the operating parameter on each index using sets of the operating parameters and the first evaluation results corresponding to the first simulation results (S14); applying a second change to the operating parameter based on a simulation search policy and the first influence degree (S16); obtaining a second simulation result by running the simulation according to the operating parameter after the second change (S17); and evaluating the second simulation result based on the indexes to obtain and output a second evaluation result (S18).

## Description

### [Technical Field]

The present disclosure relates to an information processing method and an information processing system for running simulations of a mobility service.

### [Background Art]

In recent years, along with a change in environment surrounding the markets as represented by connected autonomous shared electric (CASE), a demand for mobility services is expanding. On the other hand, elements (service factors) of a mobility service widely range. In order to optimize a mobility service, the mobility service needs to be designed and evaluated in advance. When a mobility service is implemented and improved, simulations have been used to design and evaluate the mobility service (for example, Non Patent Literature (NPL) 1).

### [Citation List]

### [Non Patent Literature]

[NPL 1] Masayuki YAMAMOTO and three others, "Simulation Analysis of Autonomous Ride-Sharing Service in City Area", [online], [searched on April 13, 2021], Internet <URL:https://www.denso.com/jp/ja/-/media/global/business/innovation/review/24/24-doc-07-paper-02.pdf>

### [Summary of Invention]

### [Technical Problem]

However, in NPL 1, a mobility service is evaluated by running simulations while exhaustively changing the number of vehicles as a service factor, and efficiency is not considered in searching for an optimum mobile service. Moreover, evaluations based on indexes such as risk, cost, and value are essential for traffic simulations, and such indexes and service factors influence each other. Hence, simulations are run while exhaustively changing the service factor as described above in order to optimize the mobility service, which results in an immense amount of simulation time.

In view of the above, the present disclosure provides an information processing method and the like which is capable of efficiently optimizing a mobility service.

### [Solution to Problem]

An information processing method according to the present disclosure is an information processing method performed by a computer. The information processing method includes: obtaining at least two first simulation results by running a simulation of a movement of a mobile object and a travel demand according to an operating parameter of the mobile object that is before a first change and the operating parameter that is after the first change, the mobile object being a mobile object in which a person rides or a delivery item is placed, the travel demand being a travel demand of the person or the delivery item; evaluating each of the at least two first simulation results based on at least two indexes to obtain a first evaluation result for each of the at least two first simulation results, the at least two indexes being selected from among a risk index, a cost index, and a value index in an operation of the mobile object; calculating a first influence degree using sets of the operating parameters and the first evaluation results corresponding to the at least two first simulation results, the first influence degree being a degree of influence of the operating parameter on each of the at least two indexes; obtaining a simulation search policy which brings an evaluation result closer to a target value, the evaluation result being obtained by evaluating a result of the simulation based on the at least two indexes; applying a second change to the operating parameter based on the simulation search policy and the first influence degree; obtaining a second simulation result by running the simulation according to the operating parameter that is after the second change; evaluating the second simulation result based on the at least two indexes to obtain a second evaluation result; and outputting the second evaluation result.

General and specific aspects disclosed above may be implemented using a system, a method, an integrated circuit, a computer program, or a computer-readable recording medium such as a CD-ROM, or any combination of systems, methods, integrated circuits, computer programs, or recording media.

### [Advantageous Effects of Invention]

An information processing method and the like according to one aspect of the present disclosure is capable of efficiently optimizing a mobility service.

### [Brief Description of Drawings]

[FIG. 1]

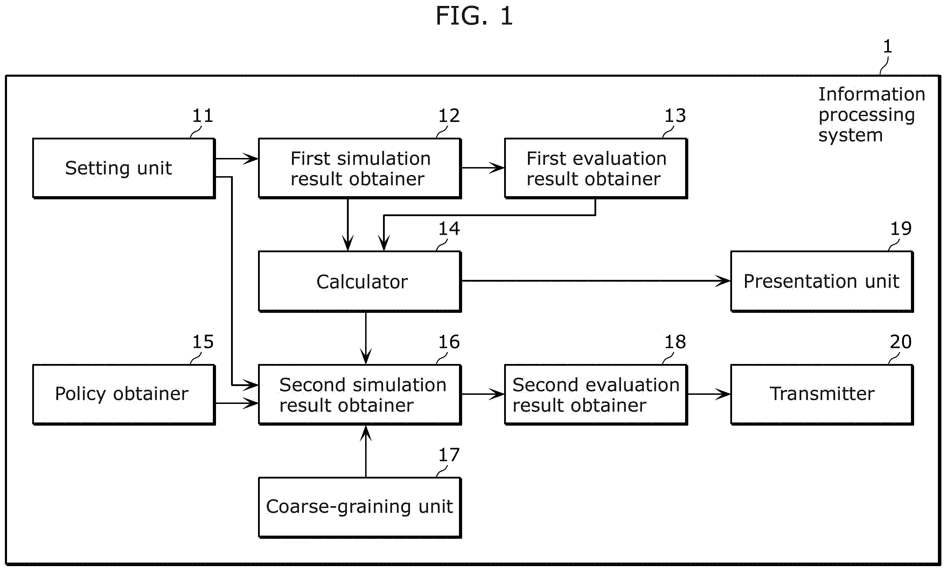

   FIG. 1 illustrates an example of an information processing system according to an embodiment.
[FIG. 2]

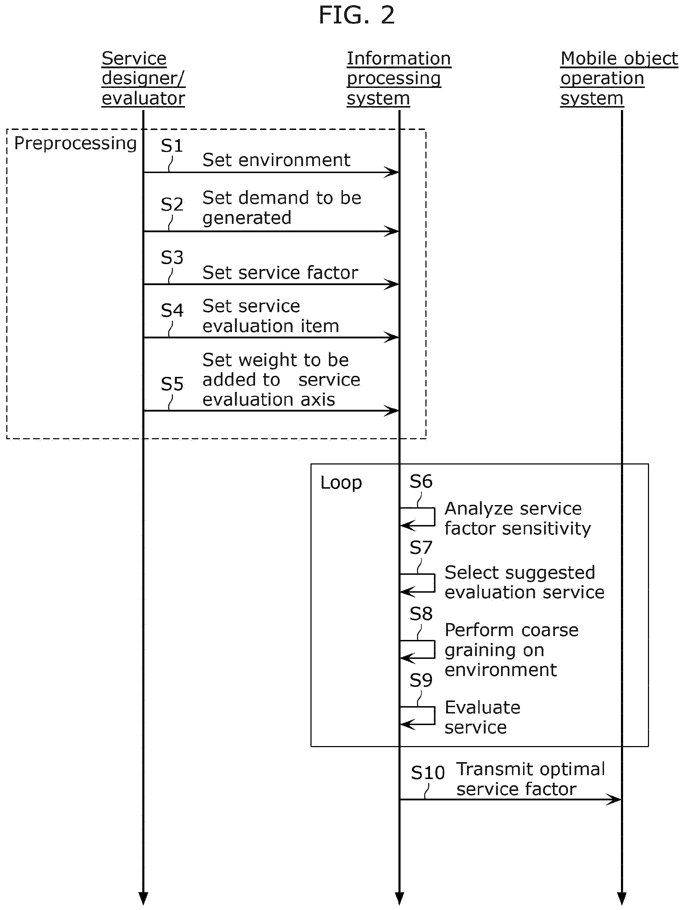

   FIG. 2 is a sequence diagram illustrating an example of a flow of information when a mobility service is designed and evaluated.
[FIG. 3]

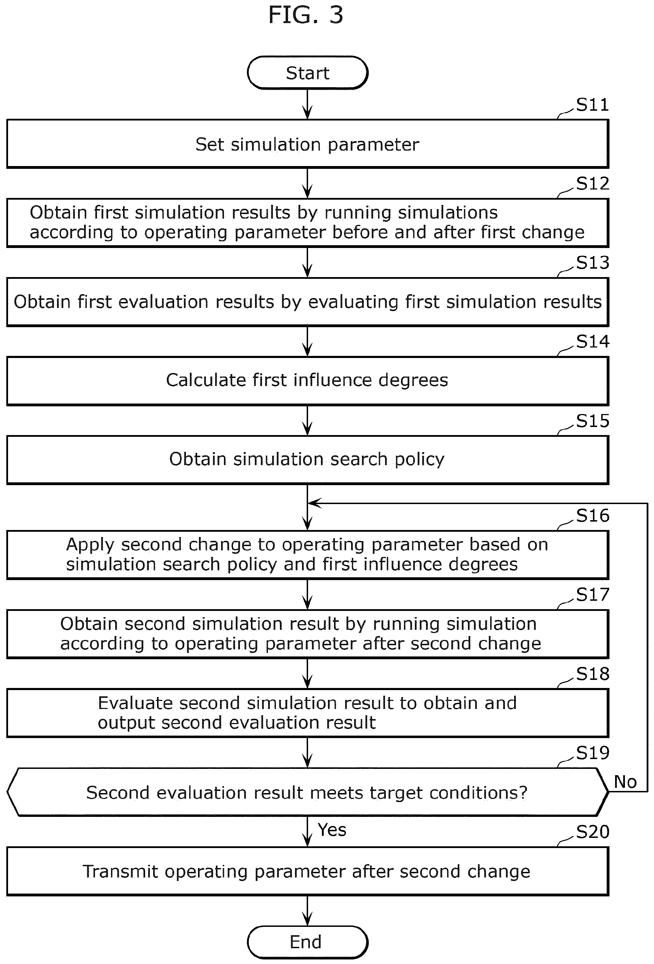

   FIG. 3 is a flowchart of an example of an operation of the information processing system according to the embodiment.
[FIG. 4A]

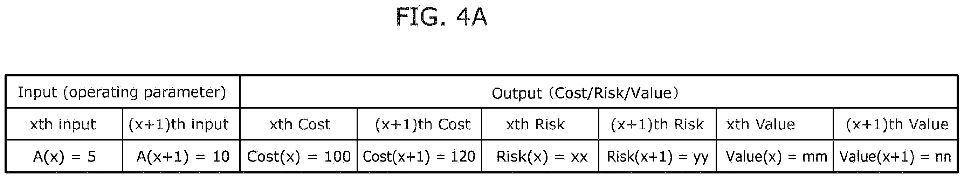

   FIG. 4A is for illustrating a method of calculating a first influence degree.
[FIG. 4B]

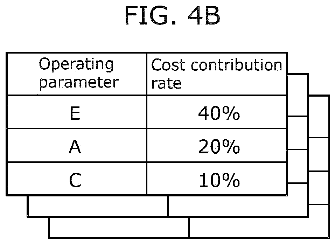

   FIG. 4B is for illustrating the method of calculating the first influence degree.
[FIG. 5]

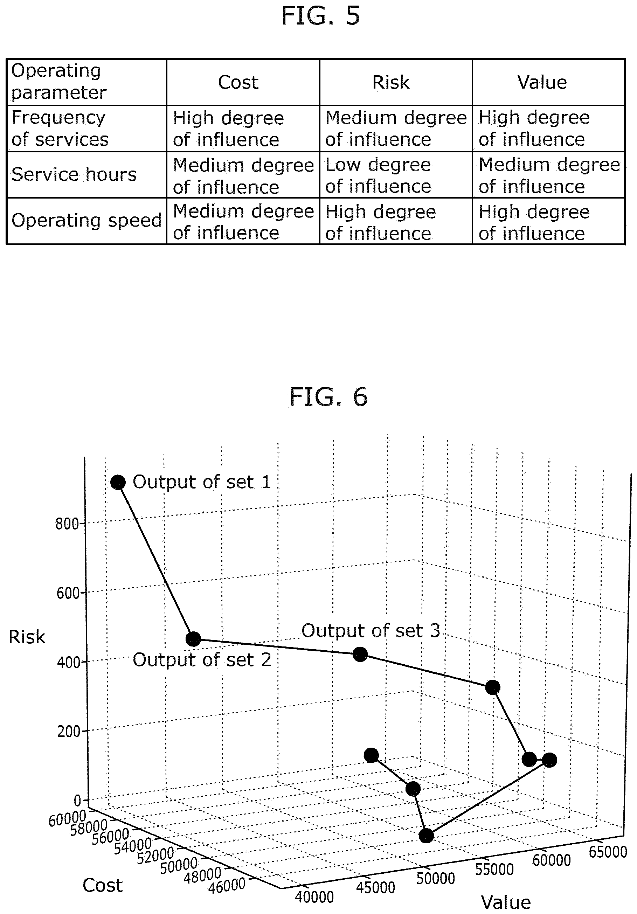

   FIG. 5 illustrates examples of the first influence degrees of each operating parameter.
[FIG. 6]
   FIG. 6 illustrates an example of evaluation results obtained by evaluating simulation results based on risk, cost, and value indexes.

### [Description of Embodiments]

An information processing method according to one aspect of the present disclosure is an information processing method performed by a computer. The information processing method includes: obtaining at least two first simulation results by running a simulation of a movement of a mobile object and a travel demand according to an operating parameter of the mobile object that is before a first change and the operating parameter that is after the first change, the mobile object being a mobile object in which a person rides or a delivery item is placed, the travel demand being a travel demand of the person or the delivery item; evaluating each of the at least two first simulation results based on at least two indexes to obtain a first evaluation result for each of the at least two first simulation results, the at least two indexes being selected from among a risk index, a cost index, and a value index in an operation of the mobile object; calculating a first influence degree using sets of the operating parameters and the first evaluation results corresponding to the at least two first simulation results, the first influence degree being a degree of influence of the operating parameter on each of the at least two indexes; obtaining a simulation search policy which brings an evaluation result closer to a target value, the evaluation result being obtained by evaluating a result of the simulation based on the at least two indexes; applying a second change to the operating parameter based on the simulation search policy and the first influence degree; obtaining a second simulation result by running the simulation according to the operating parameter that is after the second change; evaluating the second simulation result based on the at least two indexes to obtain a second evaluation result; and outputting the second evaluation result.

With this, the first influence degree that is the degree of influence of an operation parameter, which is a service factor of the mobility service, on each of at least two indexes of safety, cost, and value indexes is calculated. Hence, an optimal operating parameter (that is, the operating parameter that reflects the simulation search policy) can be efficiently searched for based on the first influence degrees. Accordingly, the mobility service can be efficiently optimized. For example, design can be efficiently performed when a mobility service is implemented, and evaluation for an improvement after the implementation of the mobility service can be efficiently performed.

For example, it may be that the second change includes changing the operating parameter based on the first influence degree to cause an evaluation result obtained by evaluating a result of the simulation based on the at least two indexes to reflect the simulation search policy.

With this, the second evaluation result can be easily brought closer to the target value by the second change applied to the operating parameter.

For example, the operating parameter may include a plurality of kinds of operating parameters, the information processing method may further include obtaining a selection policy, and the second change may include changing an operating parameter selected based on the selection policy from among the plurality of kinds of operating parameters.

With this, an operating parameter that reflects the selection policy can be selected from among a plurality of kinds of operating parameters.

For example, the evaluating of each of the at least two first simulation results and the evaluating of the second simulation result may include adding a weight to each of the at least two indexes, and the weight may be set according to information on an area subject to the simulation.

For example, an index on which an emphasis is placed differs depending on the area subject to the simulations. In view of the above, by adding a weight in accordance with the area information to each of at least two indexes, it is possible to provide a mobility service which places an emphasis on a specific index in each area.

For example, the information processing method may further include: calculating a second influence degree which is a degree of influence of each of a plurality of processes in the simulation on an evaluation result obtained by evaluating a result of the simulation based on the at least two indexes; and omitting or simplifying a process having the second influence degree that is less than or equal to a threshold value among the plurality of processes in the simulation.

With this, it is possible to reduce the calculation processing load at the time of running of the simulations.

For example, the information processing method may further include determining whether or not the second evaluation result meets a target condition; and transmitting the operating parameter that is after the second change to a mobile object operation system when the second evaluation result is determined to meet the target condition.

With this, it is possible to reflect the optimal operating parameter in the mobile object operation system.

For example, the information processing method may further include presenting the first influence degree.

With this, the service designer or the like is able to confirm the first influence degrees.

An information processing system according to one aspect of the present disclosure includes: a first simulation result obtainer which obtains at least two first simulation results by running a simulation of a movement of a mobile object and a travel demand according to an operating parameter of the mobile object that is before a first change and the operating parameter that is after the first change, the mobile object being a mobile object in which a person rides or a delivery item is placed, the travel demand being a travel demand of the person or the delivery item; a first evaluation result obtainer which evaluates each of the at least two first simulation results based on at least two indexes to obtain a first evaluation result for each of the at least two first simulation results, the at least two indexes being selected from among a risk index, a cost index, and a value index in an operation of the mobile object; a calculator which calculates a first influence degree using sets of the operating parameters and the first evaluation results corresponding to the at least two first simulation results, the first influence degree being a degree of influence of the operating parameter on each of the at least two indexes; a policy obtainer which obtains a simulation search policy which brings an evaluation result closer to a target value, the evaluation result being obtained by evaluating a result of the simulation based on the at least two indexes; a second simulation result obtainer which applies a second change to the operating parameter based on the simulation search policy and the first influence degree, and obtains a second simulation result by running the simulation according to the operating parameter that is after the second change; and a second evaluation result obtainer which evaluates the second simulation result based on the at least two indexes to obtain a second evaluation result, and outputs the second evaluation result.

With this, it is possible to provide an information processing system capable of efficiently optimizing a mobility service.

Hereinafter, an embodiment will be specifically described with reference to the drawings.

Note that the embodiment described below shows a general or specific example. Numerical values, shapes, materials, structural elements, arrangement positions and connection forms of the structural elements, steps, order of steps, and the like shown in the following embodiment are examples, and are not intended to limit the present disclosure.

### (Embodiment)

Hereinafter, an information processing system and an information processing method according to an embodiment will be described.

FIG. 1 illustrates an example of information processing system 1 according to the embodiment.

Information processing system 1 is a system for running simulations of a mobility service of a mobile object. The simulations are simulations of the movement of a mobile object in which a person rides or a delivery item is placed and travel demand of the person or the delivery item. The simulations of the movement and travel demand may include simulations of collision avoidance (collision determination) between a mobile object and an object. The mobile object is, for example, a vehicle, but may be a mobile object other than the vehicle (for example, a robot, an aircraft, or a vessel). Information processing system 1 is an example of a computer which performs an information processing method. The structural elements included in information processing system 1 may be disposed in a single housing or may be disposed in a distributed manner. When the structural elements included in information processing system 1 are disposed in the distributed manner, an information processing method may be performed by a plurality of computers. Information processing system 1 is realized by, for example, a server.

Information processing system 1 includes setting unit 11, first simulation result obtainer 12, first evaluation result obtainer 13, calculator 14, policy obtainer 15, second simulation result obtainer 16, coarse-graining unit 17, second evaluation result obtainer 18, presentation unit 19, and transmitter 20. Information processing system 1 is a computer which includes a processor, a communication interface, a memory, and the like. The memory is, for example, a read only memory (ROM) and a random access memory (RAM), and is capable of storing a program executed by the processor. Setting unit 11, first simulation result obtainer 12, first evaluation result obtainer 13, calculator 14, policy obtainer 15, second simulation result obtainer 16, coarse-graining unit 17, second evaluation result obtainer 18, presentation unit 19, and transmitter 20 are realized by, for example, a processor which executes a program stored in the memory and a communication interface.

Setting unit 11 sets one or more parameters for the simulations run by information processing system 1. For example, setting unit 11 sets an environment in which a mobility service is to be implemented, a demand to be generated in the set environment, an operating parameter of a mobile object which is an element of the service (service factor), indexes in the operation of the mobile object which are indexes for service evaluation, and a weight added to each index. Details of setting unit 11 will be described later.

First simulation result obtainer 12 runs simulations of the movement of a mobile object in which a person rides or a delivery item is placed or travel demand of the person or the delivery item according to an operating parameter of the mobile object that is before a first change and the operating parameter that is after the first change, and obtains at least two first simulation results. Details of first simulation result obtainer 12 will be described later.

First evaluation result obtainer 13 obtains first evaluation results by evaluating each of the at least two first simulation results based on at least two indexes of risk, cost, and value in the operation of the mobile object. Details of first evaluation result obtainer 13 will be described later.

Calculator 14 calculates a first influence degree using sets of the operating parameters and the first evaluation results corresponding to the at least two first simulation results. The first influence degree is the degree of influence of the operating parameter on each of at least two indexes. Details of calculator 14 will be described later.

Policy obtainer 15 obtains a simulation search policy which brings the evaluation result obtained by evaluating the simulation result based on at least two indexes closer to a target value. Policy obtainer 15 may also obtain a selection policy. Details of policy obtainer 15 will be described later.

Second simulation result obtainer 16 applies a second change to the operating parameter based on the simulation search policy and the first influence degrees, and obtains a second simulation result by running a simulation according to the operating parameter that is after the second change. Details of second simulation result obtainer 16 will be described later.

Coarse-graining unit 17 calculates a second influence degree that is the degree of influence of each of a plurality of processes in the simulations on the evaluation result obtained by evaluating the simulation result based on at least two indexes, and omits or simplifies one or more processes with second influence degrees that are less than or equal to a threshold value among the processes in the simulations. Details of course-graining unit 17 will be described later.

Second evaluation result obtainer 18 obtains a second evaluation result by evaluating the second simulation result based on at least two indexes, and outputs the second evaluation result. Second evaluation result obtainer 18 outputs, for example, the obtained second evaluation result to transmitter 20. Details of second evaluation result obtainer 18 will be described later.

Presentation unit 19 presents the first influence degrees. For example, presentation unit 19 presents the first influence degrees on a display or the like. With this, the service designer or the like is able to confirm the first influence degrees.

Transmitter 20 determines whether or not the second evaluation result meets target conditions. When the second evaluation result meets the target conditions, transmitter 20 transmits the operating parameter that is after the second change to the mobile object operation system. Transmitter 20 may transmit the second evaluation result to the terminal or the like of the service designer. Details of transmitter 20 will be described later.

Next, a flow of information when the mobility service is designed and evaluated will be described with reference to FIG. 2.

FIG. 2 is a sequence diagram illustrating an example of a flow of information when the mobility service is designed and evaluated. FIG. 2 illustrates a flow of information between a service designer/evaluator, information processing system 1, and a mobile object operation system.

As illustrated in FIG. 2, preprocessing from step S1 to step S5 is performed.

First, as the preprocessing, parameters for the simulations to be run by information processing system 1 are set by the service designer or the like. Specifically, the service designer or the like inputs various parameters, so that setting unit 11 in information processing system 1 sets parameters.

The service designer or the like sets the environment in which the mobility service is to be implemented (step S1). The setting of the environment in which the mobility service is to be implemented is, for example, a setting of map data or road data to be read by a simulator.

The service designer or the like sets a demand to be generated in the set environment (step S2). Setting of the demand to be generated in the set environment is a setting of the demand of transportation of a person or delivery of a delivery item. For example, the setting is performed by input of existing historic data. Statistical information of transportation and delivery may be input so that the demand is randomly set based on the information.

The service designer or the like sets one or more service factors (in other words, operating parameters (step S3). The setting of the operating parameters is, for example, a setting of operating parameters such as travel path, arrangement of stations, travel speed, service hours, riding capacity, sensor performance, brake performance, acceleration performance, implementation level of duplexing in the system, remote monitoring, and remote control.

The service designer or the like sets service evaluation items (in other words, indexes for evaluating the service) (step S4). Setting of the indexes is a setting of at least two indexes of safety (also referred to as risk), cost, and value in the operation of a mobile object. The risk index is, for example, an index of a risk of an accident caused by an approach between a mobile object and a person. The cost index is, for example, an index of cost such as the price of the mobile object and the fuel fee. The value index is, for example, an index of value such as a transportation amount per day and a delivery amount per day.

The service designer or the like sets weights relative to the service evaluation axes (in other words, indexes) (step S5). Each weight is set according to information on the area subject to the simulations. For example, when the area information indicates that the area includes a large number of families with children, a heavy weight is added to the risk index. Moreover, for example, when the area information indicates a dense residential area that is assumed to be in high demand for mobility services, a heavy weight is added to the value index. The weight may be set according to the budget or the like, and, for example, a heavy weight may be added to the cost index on a tight budget.

Next, information processing system 1 runs simulations with these settings by repeating step S6 to step S9.

Information processing system 1 analyzes the sensitivity of the service factor to the risk, cost, and value indexes (step S6), selects a suggested service factor to be used in service evaluation (step S7), performs coarse graining on the evaluation environment (step S8), and evaluates the service (step S9). Specific examples of these processes will be described later.

As a result of the service evaluation, information processing system 1 then determines an optimal service factor, and transmits the determined service factor to the mobile object operation system (step S10). The mobile object operation system is a system which provides a mobility service, and provides a mobility service which involves the operation of a mobile object according to the determined service factor.

Next, an operation of information processing system 1 will be described in detail with reference to FIG. 3.

FIG. 3 is a flowchart of an example of an operation of information processing system 1 according to the embodiment. Since information processing system 1 is an example of a computer which performs the information processing method according to the embodiment, FIG. 3 is also a flowchart of an example of the information processing method according to the embodiment.

First, setting unit 11 sets one or more parameters for simulations to be run by information processing system 1 (step S11). For example, setting unit 11 may set a specific area with a large number of families with children as the environment where the mobility service is to be implemented, and sets a demand to be generated in the environment based on, for example, the existing history data in the area. Moreover, for example, setting unit 11 may set a plurality of kinds of operating parameters as the operating parameters. Specifically, setting unit 11 may set, as the operating parameters, various kinds of operating parameters such as the frequency of services, service hours, and operating speed. Moreover, for example, setting unit 11 may set the risk, cost, and value indexes as indexes in the operation of the mobile object. Moreover, for example, setting unit 11 may increase the weight to be added to the risk index because the environment where the mobility service is to be implemented is an area with a large number of families with children.

Next, first simulation result obtainer 12 obtains at least two first simulation results by running simulations of the movement of the mobile object, and travel demand of a person or a delivery item according to an operating parameter of the mobile object that is before a first change and the operating parameter that is after the first change (step S12). For example, here, a first simulation result is obtained by running a simulation according to the operating parameter set to a given value by the service designer or the like (for example, the frequency of services, service hours, and operating speed set to given values) and a first simulation result is obtained again by running a simulation according to the operating parameter that is after the first change. The first simulation results are the results of simulations of the movement of the mobile object and travel demand of the person or the delivery item when the operating parameter is set to a given value. The first change is a change made to a given value (a rough change, in other words, a change that is not based on a specific policy). A simulation may be further run according to the operating parameter to which the first change is further applied, and three or more first simulation results may be obtained.

Next, first evaluation result obtainer 13 obtains first evaluation results by evaluating each of the at least two first simulation results based on at least two indexes of risk, cost, and value indexes in the operation of the mobile object (step S13). For example, here, the first evaluation results are obtained by evaluating each of the at least two first simulation results based on three indexes that are risk, cost, and value indexes in the operation of the mobile object. As each of the first evaluation results, evaluation values for three indexes are calculated.

Next, calculator 14 calculates a first influence degree using sets of the operating parameters and the first evaluation results corresponding to the at least two first simulation results (step S14). The first influence degree is the degree of influence of an operating parameter on each of at least two indexes. Here, the method of calculating the first influence degree will be described with reference to FIG. 4A and FIG. 4B, and examples of the first influence degrees of respective operating parameters will be described with reference to FIG. 5.

FIG. 4A and FIG. 4B are for illustrating the method for calculating the first influence degree.

FIG. 4A illustrates evaluation results based on each of risk, cost, and value indexes obtained as output when the value of operating parameter A in the xth simulation is 5 and the value of operating parameter A in the (x+1)th simulation is 10 as input. For example, an output (evaluation result) can be calculated with a mathematical formula in which an input (value of the operating parameter) is a variable. For example, in order to confirm the influence by the change on a given operating parameter (for example, operating parameter A), the other operating parameters (for example, operating parameters C and E) do not have to be changed when the operating parameter is changed.

FIG. 4B illustrates the first influence degree (cost contribution rate) of each operating parameter on the cost index.

A(x) is the value of operating parameter A before the first change, and A(x+1) is the value of operating parameter A after the first change. Focusing on the cost evaluation result (evaluation value) among the outputs, Cost(x) is the first evaluation result obtained by evaluating the xth first simulation result based on the cost index, and Cost(x+1) is the first evaluation result obtained by evaluating the (x+1)th first simulation result based on the cost index. Calculator 14 calculates the first influence degree of operating parameter A on the cost index using a set of A(x) that is the operating parameter and Cost(x) that is the first evaluation result which correspond to the xth first simulation result and a set of A(x+1) that is the operating parameter and Cost(x+1) that is the first evaluation result which correspond to the (x+1)th first simulation result. For example, the first evaluation result based on the cost index obtained when operating parameter, A is changed from 5 to 10 (first change) changes by 20% from 100 to 120. Hence, as illustrated in FIG. 4B, calculator 14 calculates the first influence degree (cost contribution rate) of operating parameter A on the cost index to be 20%.

In a similar manner, calculator 14 calculates the first influence degree of operating parameter A on the risk index using a set of A(x) that is the operating parameter and Risk(x) that is the first evaluation result which correspond to the xth first simulation result and a set of A(x+1) that is the operating parameter and Risk(x+1) that is the first evaluation result which correspond to the (x+1)th first simulation result. In a similar manner, calculator 14 calculates the first influence degree of operating parameter A on the value index using a set of A(x) that is the operating parameter and Value(x) that is the first evaluation result which correspond to the xth first simulation result and a set of A(x+1) that is the operating parameter and Value (x+1) that is the first evaluation result which correspond to the (x+1)th first simulation result. The first influence degrees can be calculated in a similar manner relative to operating parameter C and operating parameter E.

For example, the amount of change in each operating parameter when the first influence degree is calculated is set to approximately the same (for example, approximately the same as the amount of change from A(x) = 5 to A(x+1) = 10), but the method of setting the amount of change in each operating parameter is not particularly limited. It is because that comparison of the change amount may be difficult depending on the kind of operating parameter.

FIG. 5 illustrates examples of the first influence degree of each operating parameter.

As illustrated in FIG. 5, the first influence degrees of the operating parameters, such as the frequency of services, the service hours, and the operating speed, on the cost, risk, and value indexes are calculated. For example, it is indicated that the frequency of services influences the cost and value, the service hours hardly influences the risk, and the operating speed influences the risk and value.

Referring back to FIG. 3, policy obtainer 15 obtains a simulation search policy which brings the evaluation result obtained by evaluating the simulation result based on at least two indexes closer to the target value (step S15). The simulation search policy is, for example, a policy to reduce risk, reduce cost, and increase value. The simulation search policy is set by, for example, the service designer.

Next, second simulation result obtainer 16 applies the second change to the operating parameter based on the simulation search policy and the first influence degrees (step S16). For example, the second change includes changing the operating parameter based on the first influence degrees such that the evaluation result obtained by evaluation based on at least two indexes reflects the simulation search policy. When the simulation search policy is to reduce risk, reduce cost, and increase value, second simulation obtainer 16 changes the operating parameter such that the evaluation result indicates low risk, low cost, and high value. Moreover, with respect to the operating parameter which has a high degree of first influence on a given index, the change amount of the operating parameter can significantly vary the evaluation result based on the index. Moreover, with respect to the operating parameter which has a low degree of first influence on a given index, the change amount of the operating parameter is unlikely to vary the evaluation result based on the index. Accordingly, by changing the operating parameter in light of the first influence degrees, it is likely to obtain an evaluation result that reflects the simulation search policy.

Moreover, for example, it may be that there are several kinds of operating parameters, such as the frequency of services, operating hours, and travel speed, that policy obtainer 15 obtains a selection policy, and that the second change includes changing the operating parameter selected based on the selection policy from among the operating parameters. For example, when a selection policy which places emphasis on risk is obtained, the travel speed is changed because, as the operating parameter, the travel speed has a highest degree of influence on risk in the example of FIG. 5. Moreover, for example, when a selection policy which places emphasis on cost is obtained, the frequency of services is changed because, as the operating parameter, the frequency of services has a highest degree of influence on cost in the example of FIG. 5.

Next, second simulation result obtainer 16 obtains a second simulation result by running a simulation according to the operating parameter that is after the second change (step S17). The second simulation result is a result of the simulation of the movement of the mobile object and travel demand of a person or delivery item run with the operating parameter that is after the second change.

It may be that coarse-graining unit 17 calculates the second influence degree of each of a plurality of processes in the simulations on the evaluation results obtained by evaluating the simulation result based on at least two indexes, and omits or simplifies a process with a second influence degree that is less than or equal to a threshold value among the processes in the simulations. The simulations of the mobile object in which a person rides or a delivery item is placed and travel demand of the person or the delivery item include various processes. These processes include one or more processes which have little influence on risk, cost, and value (that is processes with the second influence degrees that are equal to or less than a threshold value). Accordingly, it is possible to reduce the calculation processing load by omitting or simplifying the processes which have little influence on the risk, cost, and value. Examples of the simplification of the processes in the simulations include reducing the elements, such as a person or obstacle, in the simulations. The simulation subject to the coarse graining may be a simulation corresponding to the first simulation result or a simulation corresponding to the second simulation result.

Next, second evaluation result obtainer 18 evaluates the second simulation result based on at least two indexes to obtain a second evaluation result, and outputs the second evaluation result (step S18). For example, here, the second evaluation result is obtained by evaluating the second simulation result based on three indexes that are risk, cost, and value indexes in the operation of the mobile object. As the second evaluation result, evaluation values for the three indexes are calculated. Second evaluation result obtainer 18 outputs the obtained second evaluation result to transmitter 20.

Next, transmitter 20 determines whether or not the second evaluation result meets target conditions (step S19). When the second evaluation result does not meet the target conditions (No in step S19), the processes from step S16 are performed again. Here, the flow up to when the second evaluation result meets the target conditions will be described with reference to FIG. 6.

FIG. 6 illustrates examples of evaluation results obtained by evaluating the simulation results based on risk, cost, and value indexes. FIG. 6 illustrates a three-dimensional graph with the axes of risk, cost, and value.

The "output of set 1" illustrated in FIG. 6 is, for example, a first evaluation result obtained by evaluating a first simulation result based on risk, cost, and value indexes in the operation of the mobile object. The first simulation result is obtained by running a simulation according to the operating parameter set to a given value. The evaluation value obtained by evaluation based on a risk index, the evaluation value obtained by evaluation based on a cost index, and the evaluation value obtained by evaluation based on a value index are plotted on the three dimensional graph as an evaluation result. The "output of set 2" illustrated in FIG. 6 is a first evaluation result obtained by evaluating a first simulation result based on risk, cost, and value indexes in the operation of the mobile object. The first evaluation result is obtained by running a simulation according to the operating parameter which has been set in the simulation in the "output of set 1" and to which the first change has been applied. The first influence degrees of each operating parameter on the risk, cost, and value indexes can be calculated from the degree of change from "output of set 1" to "output of set 2". The "output of set 3" in FIG. 6 is a second evaluation result obtained by evaluating a second simulation result based on the risk, cost, and value indexes in the operation of the mobile object. The second simulation result is obtained by running a simulation according to the operating parameter that has been set in the simulation of "output of set 2" and to which the second change has been applied.

The target conditions relative to the second evaluation result are, for example, that the evaluation value obtained by evaluation based on the risk index is within a prescribed range, that the evaluation value obtained by evaluation based on the cost index is within a prescribed range, and that the evaluation value obtained by evaluation based on the value index is within a prescribed range. For example, the processes from step S16 to step S18 are repeatedly performed till the second evaluation result meets the target conditions. The dots after the "output of set 3" illustrated in FIG. 6 are the second evaluation results obtained every time the processes from step S16 to step S18 were performed. Every time a simulation is performed after the second change is applied to the previous operating parameter, the second evaluation result also changes, and the processes from step S16 to step S18 are repeatedly performed till the second evaluation result meets the target conditions.

When a weight has been added to each index, each evaluation result has a value in accordance with the weight added. In other words, the evaluation result (evaluation value) of the index with a heavy weight greatly reflects the amount of change in the operating parameter, and the evaluation result (evaluation value) of the index with a small weight hardly reflects the amount of change in the operating parameter. Accordingly, it is possible to obtain an evaluation result which has placed emphases on a specific index by adjusting the magnitude of the weight to be added.

When the second evaluation result meets the target conditions (Yes in step S19), transmitter 20 transmits, to the mobile object operation system, the operating parameter that is after the second change (specifically, the operating parameter used in the simulation when the second evaluation result meets the target conditions) (step S20). Accordingly, the operating parameter of the mobility service determined as optimal is reflected in real time in the parameter in the actual system. For example, it is possible to change the travel path in a ride-handling service to an optimal path from the next business day, or to change the business hours to the optimal hours from the next business day.

Even when the processes from step S16 to step S18 are repeatedly performed, the second evaluation result may not satisfy the target conditions. In view of the above, the upper limit of the number of repetitions of the processes from step S16 to step S18 may be determined. When the number of repetitions reaches the upper limit, among the second evaluation results obtained by repeating step S16 to step S18, the operating parameter corresponding to the second evaluation result that is closest to the target conditions may be transmitted to the mobile object operation system.

As described above, the first influence degree that is the degree of influence of the operating parameter, which is a service factor of the mobility service, on each of at least two indexes of risk, cost, and value indexes is calculated. Hence, an optimal operating parameter (that is, an operating parameter that reflects the simulation search policy) can be efficiently searched for based on the first influence degrees. Accordingly, the mobility service can be efficiently optimized.

### (Other Embodiments)

Although the information processing method and information processing system 1 according to one or more aspects of the present disclosure have been described based on the embodiment, the present disclosure is not limited to such an embodiment. Forms obtained by various modifications to the embodiment that can be conceived by a person of skill in the art as well as forms implemented by combining structural elements in different embodiments which are within the essence of the present disclosure may be included within the one or more aspects of the present disclosure.

For example, in the embodiment, the example has been described in which policy obtainer 15 obtains a selection policy. However, policy obtainer 15 does not have to obtain the selection policy. In other words, the second change does not have to include changing the operating parameter selected based on the selection policy from among a plurality of kinds of operating parameters.

For example, in the embodiment, the example has been described in which weights are added to at least two indexes in the evaluation based on the at least two indexes. However, weights do not have to be added to the at least two indexes.

For example, in the embodiment, the example has been described in which information processing system 1 includes coarse-graining unit 17. However, information processing system 1 does not have to include coarse-graining unit 17. In other words, the second influence degree that is the degree of influence of each process in the simulation on the evaluation result obtained by evaluating the simulation result based on at least two indexes does not have to be calculated. Among the processes in the simulations, the process with a second influence degree that is less than or equal to a threshold value does not have to be omitted or simplified.

For example, in the embodiment, the example has been described in which information processing system 1 includes presentation unit 19. However, information processing system 1 does not have to include presentation unit 19. In other words, the first influence degree does not have to be presented.

For example, in the embodiment, the example has been described in which information processing system 1 includes transmitter 20. However, information processing system 1 does not have to include transmitter 20. In other words, whether or not the second evaluation result meets the target conditions does not have to be determined. When the second evaluation result meets the target conditions, the operating parameter that is after the second change does not have to be transmitted to the mobile object operation system.

For example, the present disclosure can be realized as a program for causing a processor to execute the steps included in the information processing method. Moreover, the present disclosure can be realized as a non-transitory computer-readable recording medium such as a CD-ROM on which the program is recorded.

For example, when the present disclosure is realized by a program (software), each step is executed by executing the program using hardware resources such as the CPU, memory, and input and output circuit of the computer. In other words, each step is executed when the CPU obtains data from the memory, the input and output circuit, or the like and performs an operation, or outputs the operation result to the memory, the input and output circuit or the like.

In the embodiment described above, each structural element included in information processing system 1 may be configured in the form of a dedicated hardware product or realized by executing a software program suitable for each structural element. Each of the structural elements may be realized by means of a program executing unit, such as a central processing unit (CPU) and a processor, reading and executing the software program recorded on a recording medium such as a hard disk or a semiconductor memory.

Part or all of the functions of information processing system 1 according to the embodiment described above is typically realized as a large scale integration (LSI) which is an integrated circuit (IC). They may be individually configured as single chips or may be configured so that part or all of the functions are included in a single chip. Moreover, the integrated circuit is not limited to the LSI, and may be realized by a dedicated circuit or a general-purpose processor. A field programmable gate array (FPGA) which can be programmed after the manufacture of LSI or a reconfigurable processor in which the connection and settings of circuit cells inside the LSI can be reconfigured may be used.

In addition, a form obtained by making various modifications conceivable by those skilled in the art to the embodiment of the present disclosure without departing from the gist of the present disclosure are also included in the present disclosure.

### [Industrial Applicability]

The present disclosure is applicable to a system which provides a mobility service.

### [Reference Signs List]

- 1: information processing system
- 11: setting unit
- 12: first simulation result obtainer
- 13: first evaluation result obtainer
- 14: calculator
- 15: policy obtainer
- 16: second simulation result obtainer
- 17: coarse-graining unit
- 18: second evaluation result obtainer
- 19: presentation unit
- 20: transmitter

## Claims

1. An information processing method performed by a computer, the information processing method comprising:
obtaining at least two first simulation results by running a simulation of a movement of a mobile object and a travel demand according to an operating parameter of the mobile object that is before a first change and the operating parameter that is after the first change, the mobile object being a mobile object in which a person rides or a delivery item is placed, the travel demand being a travel demand of the person or the delivery item;
evaluating each of the at least two first simulation results based on at least two indexes to obtain a first evaluation result for each of the at least two first simulation results, the at least two indexes being selected from among a risk index, a cost index, and a value index in an operation of the mobile object;
calculating a first influence degree using sets of the operating parameters and the first evaluation results corresponding to the at least two first simulation results, the first influence degree being a degree of influence of the operating parameter on each of the at least two indexes;
obtaining a simulation search policy which brings an evaluation result closer to a target value, the evaluation result being obtained by evaluating a result of the simulation based on the at least two indexes;
applying a second change to the operating parameter based on the simulation search policy and the first influence degree;
obtaining a second simulation result by running the simulation according to the operating parameter that is after the second change;
evaluating the second simulation result based on the at least two indexes to obtain a second evaluation result; and
outputting the second evaluation result.

2. The information processing method according to claim 1,
wherein the second change includes changing the operating parameter based on the first influence degree to cause an evaluation result obtained by evaluating a result of the simulation based on the at least two indexes to reflect the simulation search policy.

3. The information processing method according to claim 1 or claim 2,
wherein the operating parameter includes a plurality of kinds of operating parameters,
the information processing method further comprises:
obtaining a selection policy, and
the second change includes changing an operating parameter selected based on the selection policy from among the plurality of kinds of operating parameters.

4. The information processing method according to any one of claims 1 to 3,
wherein the evaluating of each of the at least two first simulation results and the evaluating of the second simulation result include adding a weight to each of the at least two indexes, and
the weight is set according to information on an area subject to the simulation.

5. The information processing method according to any one of claims 1 to 4, further comprising:
calculating a second influence degree which is a degree of influence of each of a plurality of processes in the simulation on an evaluation result obtained by evaluating a result of the simulation based on the at least two indexes; and
omitting or simplifying a process having the second influence degree that is less than or equal to a threshold value among the plurality of processes in the simulation.

6. The information processing method according to any one of claims 1 to 5, further comprising:
determining whether or not the second evaluation result meets a target condition; and
transmitting the operating parameter that is after the second change to a mobile object operation system when the second evaluation result is determined to meet the target condition.

7. The information processing method according to any one of claims 1 to 6, further comprising:
presenting the first influence degree.

8. An information processing system comprising:
a first simulation result obtainer which obtains at least two first simulation results by running a simulation of a movement of a mobile object and a travel demand according to an operating parameter of the mobile object that is before a first change and the operating parameter that is after the first change, the mobile object being a mobile object in which a person rides or a delivery item is placed, the travel demand being a travel demand of the person or the delivery item;
a first evaluation result obtainer which evaluates each of the at least two first simulation results based on at least two indexes to obtain a first evaluation result for each of the at least two first simulation results, the at least two indexes being selected from among a risk index, a cost index, and a value index in an operation of the mobile object;
a calculator which calculates a first influence degree using sets of the operating parameters and the first evaluation results corresponding to the at least two first simulation results, the first influence degree being a degree of influence of the operating parameter on each of the at least two indexes;
a policy obtainer which obtains a simulation search policy which brings an evaluation result closer to a target value, the evaluation result being obtained by evaluating a result of the simulation based on the at least two indexes;
a second simulation result obtainer which applies a second change to the operating parameter based on the simulation search policy and the first influence degree, and obtains a second simulation result by running the simulation according to the operating parameter that is after the second change; and
a second evaluation result obtainer which evaluates the second simulation result based on the at least two indexes to obtain a second evaluation result, and outputs the second evaluation result.
